# FASCICULE DE BREVET EUROPEEN

(11) **EP 0 653 298 B1**
(45) Date de publication et mention de la délivrance du brevet: **08.12.1999**
(21) Numéro de dépôt: 94402398.5
(22) Date de dépôt: 25.10.1994
(51) Int. Cl.: B32B 17/10, C03C 27/12, F41H 5/04

(54) **Vitres blindées et pare-balles pour véhicules automobiles**
Beschussfeste Panzerglassscheibe für Autos
Bulletproof and armoured glass for cars

(30) Priorité: 25.10.1993 DE 4336321
(43) Date de publication de la demande: 17.05.1995
(73) Titulaire: SAINT-GOBAIN VITRAGE, 92400 Courbevoie (FR)
(72) Inventeur: Von Alpen, Ulrich, Dr., D-52078 Aachen (DE); Sauer, Gerd, D-52224 Stolberg (DE)
(74) Mandataire: Muller, René

(56) Documents cités:
- EP-A- 0 536 049
- US-A- 3 630 809
- US-A- 4 786 783

## Description

L'invention en question a trait à une vitre blindée et pare-balles, destinée en particulier aux véhicules automobiles.

Les vitres blindées et pare-balles (anti-balles) sont connues sous plusieurs formes. Elles sont généralement constituées de plusieurs feuilles de verre silicaté reliées entre elles par des couches thermoplastiques intermédiaires. Leur résistance aux impacts de balles est plus ou moins prononcée selon leur structure, c'est à dire selon l'épaisseur et le nombre des différentes couches. Cette résistance peut être améliorée par l'augmentation de l'épaisseur totale de la vitre blindée et/ou par l'adjonction d'une ou plusieurs couche(s) faite(s) d'un polymère résistant aux chocs (un polycarbonate, par exemple) et/ou en posant une autre feuille séparée par une couche d'air. Néanmoins, I'épaississement de la vitre blindée est globalement limité par des impératifs de fabrication. Ces vitres répondent à la norme DIN 52290 qui envisage plusieurs classes de vitrages blindés et anti-balles.

En dépit de la résistance relativement forte aux impacts de balles des vitres blindées, il est d'un intérêt primordial d'éviter que les passagers du véhicule ne soient vus et reconnus depuis l'extérieur. C'est dans ce but que l'on installe fréquemment des rideaux opaques derrière les vitres blindées, mais cela interdit également aux occupants du véhicule de regarder à l'extérieur, ce qu'ils souhaitent généralement pouvoir faire. L'effet voulu, à savoir empêcher que l'on puisse voir à l'intérieur tout en permettant à l'occupant d'observer l'extérieur, peut être obtenu par l'utilisation d'une couche, d'une feuille ou d'une vitre qui présente pour la bande spectrale de lumière visible une transparence relativement faible.

Notons par ailleurs que, pour parvenir à un résultat efficace, il est nécessaire que l'intérieur du véhicule ne soit pas éclairé et que la clarté soit nettement plus importante au dehors qu'au dedans.

Les vitres pare-balles déjà connues n'offrent quant à elles aucune protection contre les appareils de vision nocturne, même si, à la lumière du jour, elles interdisent de voir à l'intérieur depuis l'extérieur. C'est ainsi que, par exemple lors de trajets de nuit, des tireurs équipés d'appareils de visée à infrarouges peuvent parfaitement mettre en joue les personnes menacées, sans que ces dernières ne le remarquent. De tels viseurs sont dotés d'un émetteur infrarouge, qui envoie un puissant faisceau de lumière IR éclairer la zone visée, et d'un convertisseur d'infrarouges fixé sur la lunette de visée, qui transforme en lumière visible la lumière infrarouge réfléchie.

Cette invention est destinée à produire une vitre blindée, tout particulièrement pour les véhicules automobiles, qui, outre sa résistance aux balles, offre une protection renforcée, même en cas de trajets de nuit, contre les appareils de vision nocturne.

La vitre blindée conforme à cette invention est définie aux revendications et se distingue par le fait qu'elle présente, dans la bande du spectre lumineux comprise entre 780 et 1200 nm, une transparence globale inférieure à 15 %, et de préférence inférieure à 10 %.

Parce que les feuilles de verre silicaté utilisées communément pour fabriquer des vitres feuilletées et blindées, possèdent, tout comme les couches thermoplastiques intermédiaires, une forte transparence pour les rayonnements infrarouges, la vitre blindée obtenue par le biais de cette invention comporte au minimum une couche qui effectue le filtrage nécessaire des infrarouges dans la bande spectrale en question.

Cet effet s'obtient par l'ajout de couches superficielles semi-réfléchissantes sur l'une des feuilles de verre silicaté formant la vitre de verre feuilleté et/ou par l'utilisation d'une feuille de verre silicaté, qui, en tant que telle, ne transmet que très faiblement la lumière émise dans le domaine infrarouge précité. Le pouvoir filtrant des couches superficielles et semi-réfléchissantes appropriées repose essentiellement sur leur pouvoir de réflexion sélective relativement fort dans ce même domaine infrarouge. D'autre part, le pouvoir filtrant des feuilles de verre silicaté dotées de structures spéciales provient de l'absorption des rayonnements infrarouges de la bande spectrale concernée. Ces couches et feuilles à la transparence sélective sont connues pour d'autres types d'utilisation et sont accessibles à tout spécialiste.

En tant que couche sélective présentant une faible transmission dans l'infra-rouge, on peut utiliser par exemple une des couches multiples (ou multicouches) présentant les séquences suivantes:
ZnO-Ag-ZnO
ZnO-Ag-ZnO-Ag-ZnO
ZnO-Ag-Zn-ZnO-Ag-Zn-ZnOx
SnO₂-ZnO-Zn-Ag-ZnO-Zn-Ag-ZnO
Ti (ou TiOx)-ZnS-Ag-ZnS-Ag-ZnS-Ti (ou TiOx).

Ces couches peuvent être formées sur le substrat en verre par dépôt par pulvérisation cathodique réactive sous vide ou par évaporation sous vide.

Des couches particulièrement adaptées à l'application selon l'invention sont notamment une couche formée de cinq sous-couches selon la disposition et avec les épaisseurs suivantes : ZnO (30 nm - Ag (10 nm) - ZnO (77 nm) - Ag (10 nm) - ZnO (30 nm),
ou encore la couche neutre en couleur suivante:
TiOx (1 nm) - ZnS (28 nm) - Ag (10 nm) - ZnS (62 nm) - Ag (12 nm) - ZnS (28 nm), TiOx (1nm).

Les vitres blindées possédant les propriétés obtenues par le biais de cette invention offrent une protection optimale en cas de circulation de nuit, car elles sont pratiquement opaques pour les appareils de vision nocturne.

Théoriquement, les vitres blindées dotées de propriétés filtrantes, obtenues par cette invention présentent, dans la partie visible du spectre, un haut degré de transparence, ce qui est indispensable lorsqu'elles sont utilisées comme pare-brise et vitres latérales avant d'automobiles, par exemple. C'est pourquoi de telles vitres ne peuvent offrir de jour aucune protection renforcée quant à empêcher de voir à l'intérieur du véhicule depuis l'extérieur. En revanche, pour ce qui est des vitres latérales arrière et de la lunette arrière, le minimum de transparence exigé dans le domaine de la lumière visible n'a pas lieu d'être.

Ces vitres, qui revêtent une importance considérable pour la protection des personnes menacées, placées habituellement à l'arrière du véhicule, sont également pourvues, dans la version perfectionnée de cette invention, d'au moins une couche ou feuille, réfléchissante ou absorbante, qui réduit si fortement la transparence dans la bande spectrale de la lumière visible qu'il est impossible de distinguer quoi que ce soit à l'intérieur du véhicule, même de jour, et donc de voir ou même de deviner les passagers.

D'autres avantages et caractéristiques de l'invention apparaîtront dans la description suivante d'exemples de réalisations, faite en référence aux figures.

Les trois premières figures sont des vues en coupe, les deux suivantes des graphiques. Elles représentent:
Fig.1 une vitre blindée comportant une couche réfléchissant les rayonnements infrarouges;
Fig.2 une vitre blindée comportant une feuille de verre absorbant les rayonnements infrarouges;
Fig.3 une vitre blindée comprenant une feuille de verre absorbant les rayonnements infrarouges et une couche semi-réfléchissante supplémentaire;
Fig.4 le diagramme spectral de transmission et de réflexion d'une couche superficielle semi-réfléchissante adaptée;
Fig.5 le diagramme spectral de transmission et de réflexion d'une feuille de verre absorbant les infrarouges.

Les vitres blindées décrites ici conviennent en principe à toutes les fenêtres d'un véhicule automobile, aussi bien aux vitres fixées lors du montage, comme les pare-brise et lunettes arrière, que celles des fenêtres latérales et de portières, qu'elles soient fixes ou coulissantes .

L'installation des vitres blindées se fait de la façon habituelle. C'est pourquoi les détails s'y rapportant ne figurent pas sur les illustrations.

Selon le modèle de vitre blindée, tout spécialement si l'on utilise une ou plusieurs feuilles ou couches dont le pouvoir d'absorption pour la bande de la lumière visible a été rehaussé, la transmission globale du spectre visible se situe plus ou moins au dessous des valeurs de transmission réglementaires pour les pare-brise et vitres latérales avant, si bien que des autorisations spéciales sont nécessaires dans ces cas précis. Comme il n'existe aucune réglementation en ce qui concerne le degré minimum de transmission des vitres latérales arrière et lunettes arrière, ces vitres blindées peuvent tout à fait être utilisées pour ces fenêtres, afin d'offrir une protection efficace des personnes, et ce sans que de telles autorisations spéciales soient exigées.

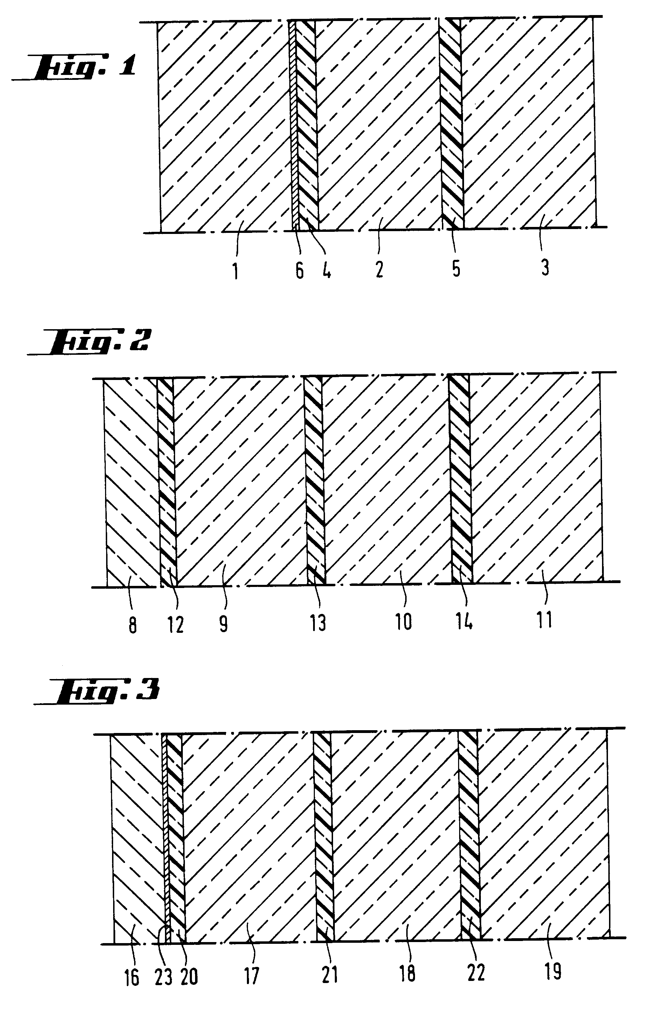

La vitre blindée représentée sur la figure 1 comprend trois feuilles de verre flotté (1, 2 et 3), chacune d'une épaisseur de 8 mm. Ces trois feuilles sont fixées entre elles par les deux couches intermédiaires 4 et 5, épaisses chacune de 0,76 mm et constituées de polyvinylbutyral. L'épaisseur de cette combinaison de feuilles de verre flotté et de couches intermédiaires peut naturellement être augmentée dans le but d'améliorer sa résistance aux balles. Il est également possible d'utiliser, pour fabriquer une vitre blindée, plus de trois feuilles de verre flotté et/ou une ou plusieurs couches supplémentaires, faite(s) d'une matière plastique résistant aux chocs et posée(s) sur la face orientée vers l'intérieur du véhicule, ce qui permet d'éviter que cette face n'éclate sous l'effet d'un impact de balles.

La feuille de verre flotté n°1, orientée vers la face extérieure, est pourvue, du côté tourné vers la couche intermédiaire n° 4, d'une couche de surface (6) réfléchissant les rayonnements infrarouges. Cette couche portant le numéro 6 est généralement obtenue par le procédé de pulvérisation cathodique réactive canalisée par champ magnétique. Il s'agit en particulier d'une couche multiple contenant une fine feuille d'argent jouant le rôle de couche fonctionnelle. Par exemple, une couche multiple n° 6 peut comprendre deux couches d'oxyde de zinc séparées par une couche d'argent, les épaisseurs de ces trois couches étant calculées de manière à obtenir les propriétés réfléchissantes souhaitées. La couche multiple n° 6 comprend, de manière appropriée, une mince couche de surface faite d'un autre oxyde de métal, tel qu'un oxyde d'étain ou de tantale, qui permet d'améliorer l'adhérence de la couche multiple n° 6 à la couche intermédiaire de polyvinylbutyral n° 4.

La vitre blindée représentée sur la figure 2 est constituée de quatre feuilles de verre silicaté séparées (8, 9, 10 et 11), reliées entre elles par les couches thermoplastiques intermédiaires de polyvinylbutyral n° 12, 13 et 14, épaisses chacune de 0,76 mm. Si les vitres n° 9, 10 et 11 sont encore une fois des feuilles de verre flotté de 8 mm, la feuille n° 8, qui est posée sur la face de la vitre blindée orientée vers l'extérieur, est en revanche une feuille de verre silicaté épaisse de 4 mm, par exemple, et capable d'absorber les rayonnements infrarouges.

Les structures des feuilles de verre silicaté dotées des propriétés d'absorption adaptées figurent entre autres dans les demandes de brevets européens 0 452 207 et 0 536 049 desquelles l'homme de métier pourra tirer l'enseignement nécessaire à la réalisation de la présente invention. Parmi ces structures de verre connues, il est possible de sélectionner les plus appropriées en fonction des propriétés de transmission et d'absorption exigées dans un cas précis et de l'épaisseur de vitre souhaitée.

La figure 3 représente un type de vitre blindée qui contient à la fois une feuille de verre silicaté absorbante et une couche semi-réfléchissante. Dans ce cas, la vitre blindée est encore une fois constituée de quatre feuilles de verre silicaté différentes, à savoir d'une feuille n°16, faite d'un verre absorbant les infrarouges et épaisse de 4 mm, par exemple, combinée avec les trois feuilles de verre flotté n° 17, 18 et 19, de 8 mm chacune. Ces quatre feuilles de verre silicaté sont liées entre elles au moyen des couches intermédiaires n° 20, 21 et 22, épaisses de 0,76 mm chacune. La feuille n° 16, faite d'un verre absorbant les rayonnements infrarouges, est de nouveau disposée sur la face donnant sur l'extérieur de la vitre de verre feuilleté. De ce point de vue, la structure de la vitre blindée rappelle celle de la vitre décrite dans la figure 2, mais s'en distingue dans ce cas précis, dans la mesure où une couche multiple n°23, dont la structure peut être semblable à celle de la couche semi- réfléchissante n°6 décrite sur la figure 1, est également disposée sur le côté de la feuille externe n°16 qui est en contact avec la couche intermédiaire n° 20. Une vitre blindée qui comprend à la fois une feuille de verre silicaté absorbante et une couche semi-réfléchissante s'avère tout spécialement efficace pour l'effet escompté, car une telle vitre empêche de voir nettement, même de jour, à l'intérieur du véhicule et possède d'autre part un pouvoir filtrant très prononcé dans le domaine infrarouge, si bien qu'elle offre une sécurité optimale contre les appareils de vision nocturne.

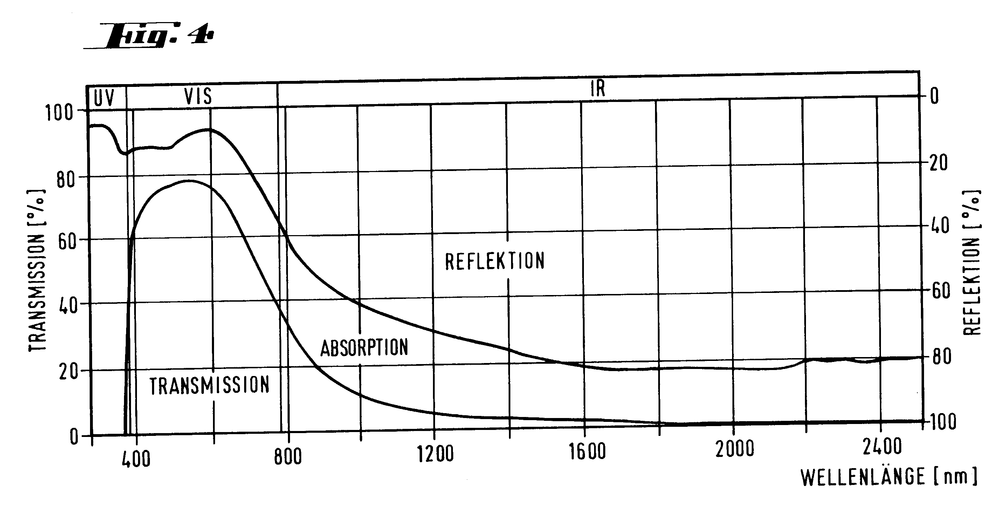

La figure 4 restitue les propriétés de transmission et de réflexion spectrales d'une couche semi-réfléchissante tout particulièrement adaptée au but visé par cette invention. Cette couche est multiple et se compose de cinq sous-couches ordonnées selon la disposition suivante: ZnO (30 nm) - Ag (10 nm) - ZnO (77 nm) - Ag (10 nm) - ZnO (30 nm).

Les valeurs restituées sur le diagramme ont été mesurées pour une vitre feuilletée constituée de deux feuilles de verre flotté de 2 mm d'épaisseur chacune et d'une couche intermédiaire de 0,76 mm de polyvinylbutyral, l'une des feuilles de verre flotté étant, sur son côté tourné vers la couche intermédiaire, pourvue d'une couche multiple possédant la structure déjà décrite plus haut. Mais l'évolution caractéristique des courbes de transmission et de réflexion est exclusivement déterminée par la couche multiple semi-réfléchissante. On constate en particulier que la transmission de lumière visible est de l'ordre de 70 %, tandis qu'elle atteint des valeurs très basses pour la partie du domaine infrarouge en question.

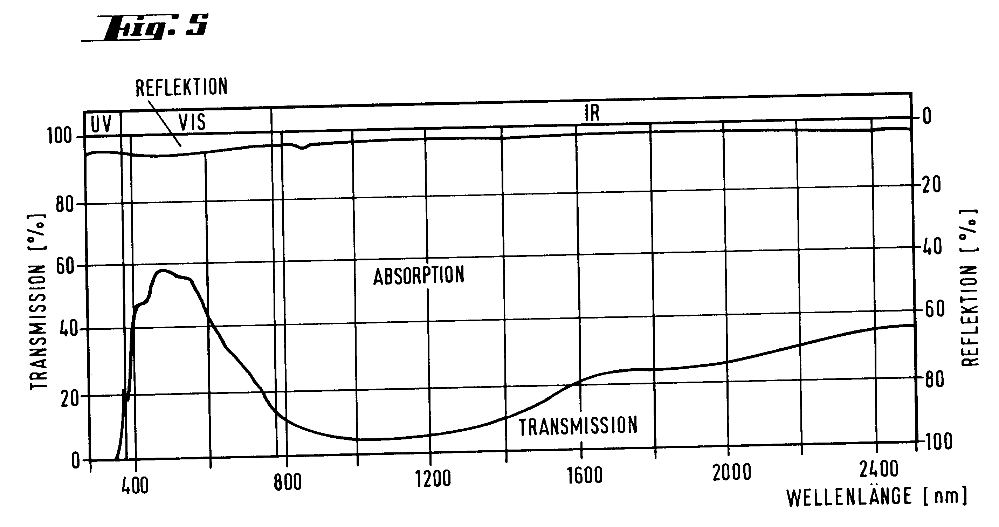

La figure 5 présente les valeurs de transmission d'une feuille absorbante de verre silicaté adaptée. Il s'agit ici de valeurs mesurées pour une feuille de verre silicaté de 4 mm et dont la structure se présente telle qu'elle est décrite dans le brevet européen 0 536 049 (exemples 6 à 11). Dans ce cas également, la feuille possède un pouvoir de transmission relativement fort, d'environ 50 % dans la bande de lumière visible, tandis que la transmission dans la partie du domaine infrarouge qui nous occupe se situe sous la barre des 10 %. Une modification de l'épaisseur de la feuille et/ou un changement insignifiant dans la structure du verre peut faire paraître les courbes de transmission quelque peu différentes dans un cas précis, sans pour autant que l'évolution des courbes en soit profondément bouleversée.

Cette invention permet également de placer la couche semi- réfléchissante et/ou la feuille absorbant les infrarouges à d'autres endroits au sein de la vitre blindée, sans que l'effet visé par cette invention pour cette vitre blindée en soit profondément modifié. Les valeurs de transmission correspondant à la lumière visible et répondant aux besoins présents peuvent également varier sur une large amplitude sans que cela nuise à la protection particulière offerte contre les appareils de vision nocturne.

Si les vitres blindées conçues conformément à cette invention ont été décrites ici pour un usage appliqué aux automobiles, il est également possible de les utiliser pour des véhicules sur rails ou bien pour la vitrerie d'immeubles.

## Revendications

1. Vitre blindée et pare-balles constituée de plusieurs feuilles de verre (1, 2, 3, 16, 17, 18, 19) et répondant à la norme DIN 52290, destinée en particulier aux véhicules automobiles, **caractérisée en ce que** au moins une feuille (1, 16) est pourvue d'une couche réfléchissante pour les longueurs d'ondes comprises entre 780 et 1200 nm de manière à ce que la vitre blindée et pare-balles présente une transparence globale inférieure à 15 %, notamment inférieure à 10 %, dans la partie du spectre lumineux comprise entre 780 et 1200 nm.

2. Vitre blindée et pare-balles constituée de plusieurs feuilles de verre (8, 9, 10, 11, 16, 17, 18, 19) et répondant à la norme DIN 52290, destinée en particulier aux véhicules automobiles **caractérisée en ce que** au moins une des feuilles constitutives (8, 16) provient d'un verre absorbant pour les longueurs d'onde comprises entre 780 et 1200 nm de manière à ce que la vitre blindée et pare-balles présente une transparence globale inférieure à 15 %, notamment inférieure à 10 %, dans la partie du spectre lumineux comprise entre 780 et 1200 nm.

3. Vitre blindée et pare-balles constituée de plusieurs feuilles de verre (16, 17, 18, 19) et répondant à la norme DIN 52290, destinée en particulier aux véhicules automobiles, **caractérisée en ce que** au moins une feuille (16) est pourvue d'une couche réfléchissante pour les longueurs d'ondes comprises entre 780 et 1200 nm **et qu'au moins** une des feuilles constitutive (16) provient d'un verre absorbant pour les longueurs d'onde comprise entre 780 et 1200 nm de manière à ce que la vitre blindée et pare-balles présente une transparence globale inférieure à 15 %, notamment inférieure à 10 %, dans la partie du spectre lumineux comprise entre 780 et 1200 nm.

4. Vitre blindée et pare-balles selon la revendication 1 ou 3, dont la couche superficielle (6, 23) réfléchissante pour les longueurs d'ondes comprises entre 780 et 1200 nm est constituée d'une couche multiple obtenue par une technique de dépôt sous vide et possédant au moins une couche fonctionnelle à base d'argent.

5. Vitre blindée et pare-balles selon la revendication 1, 3 ou 4, **caractérisée en ce que** la couche fonctionnelle à base d'argent est comprise dans une couche multiple choisie parmi les séquences suivantes : ZnO-Ag-ZnO, ZnO-Ag-ZnO-Ag-ZnO, ZnO-Ag-Zn-ZnO-Ag-Zn-ZnOₓ, SnO₂-ZnO-Zn-Ag-ZnO-Zn-Ag-ZnO, Ti (ouTiOₓ)-ZnS-Ag-ZnS-Ag-ZnS-Ti (ou TOₓ).

6. Vitre blindée et pare-balles selon une des revendications 1, 3, 4 ou 5 dont la couche superficielle (6, 23) réfléchissante pour les longueurs d'ondes comprises entre 780 et 1200 nm est posée sur la surface tournée vers l'intérieur de la feuille la plus externe (1, 16).

7. Vitre blindée et pare-balles selon l'une des revendications 1 à 6, dont la face orientée vers l'intérieur du véhicule est pourvue d'une ou plusieurs couches de polymère empêchant son éclatement en cas d'impacts de balles.

8. Vitre blindée et pare-balles selon l'une des revendications 1 à 7, comportant en outre, sur la face orientée vers l'extérieur, une autre feuille posée devant la vitre de verre feuilleté et définissant une couche d'air intercalaire.

## Claims

1. Armoured, bullet-proof window constituted by several glass sheets (1, 2, 3, 16, 17, 18, 19) and complying with DIN standard 52290, more particularly intended for cars, characterized in that at least one sheet (1, 16) is provided with a film, which reflects wavelengths between 780 and 1200 nm in such a way that the armoured, bullet-proof window has a total transparency below 15%, particularly below 10%, in that part of the light spectrum between 780 and 1200 nm.

2. Armoured, bullet-proof window constituted by several glass sheets (8, 9, 10, 11, 16, 17, 18, 19) and complying with DIN standard 52290, more particularly intended for cars, characterized in that at least one of the constituent sheets (8, 16) is made from an absorbing glass for wavelengths between 780 and 1200 nm, so that the armoured, bullet-proof window has a total transparency below 15%, particularly below 10%, in that part of the light spectrum between 780 and 1200 nm.

3. Armoured, bullet-proof window constituted by several glass sheets (16, 17, 18, 19) and complying with DIN standard 52290, more particularly intended for cars, characterized in that at least one sheet (16) is provided with a film reflecting wavelengths between 780 and 1200 nm and that at least one of the constituent sheets (16) is of an absorbing glass for wavelengths between 780 and 1200 nm, so that the armoured, bullet-proof window has a total transparency below 150%, particularly below 10%, in that part of the light spectrum between 780 and 1200 nm.

4. Armoured, bullet-proof window according to claims 1 or 3, whereof the surface film (6, 23) reflecting for wavelengths between 780 and 1200 nm is constituted by a multilayer film obtained by vacuum deposition and having at least one silver-based functional film.

5. Armoured, bullet-proof window according to claim 1, 3 or 4, characterized in that the silver-based functional film is comprised in a multilayer film chosen from among the following sequences: ZnO-Ag-ZnO, ZnO-Ag-ZnO-Ag-ZnO, ZnO-Ag-Zn-ZnO-Ag-Zn-ZnOₓ, SnO₂-ZnO-Zn-Ag-ZnO-Zn-Ag-ZnO, Ti (or TiOₓ) - ZnS-Ag-ZnS-Ag-ZnS-Ti (or TiOₓ).

6. Armoured, bullet-proof window according to one of the claims 1, 3, 4 or 5, whereof the surface film (6, 23) reflecting for wavelengths between 780 and 1200 nm is placed on the surface turned towards the inside of the outermost sheet (1, 16).

7. Armoured, bullet-proof window according to one of the claims 1 to 6, whereof the face oriented towards the inside of the vehicle is provided with one or more polymer films preventing its shattering in the case of bullet impact.

8. Armoured, bullet-proof window according to one of the claims 1 to 7 and also having on the face oriented towards the outside another sheet placed in front of the laminated glass window and defining a spacing air layer.

## Patentansprüche

1. Beschußhemmende Panzerglasscheibe aus mehreren Glasscheiben (1, 2, 3, 16, 17, 18, 19) entsprechend der Norm DIN 52 290, insbesondere für Kraftfahrzeuge, **dadurch gekennzeichnet**, daß Wenigstens eine Scheibe (1, 16) mit einer Wellenlängen im Bereich von 780 bis 1200 nm reflektierenden Schicht derart versehen ist, daß die beschußhemmende Panzerglasscheibe eine Gesamtlichtdurchlässigkeit von weniger als 15%, vorzugsweise von weniger als 10 % in dem Lichtspektralbereich zwischen 780 und 1200 nm aufweist.

2. Beschußhemmende Panzerglasscheibe aus mehreren Glasscheiben (8, 9, 10, 11, 16, 17, 18, 19) entsprechend der Norm DIN 52 290, insbesondere für Kraftfahrzeuge, **dadurch gekennzeichnet**, daß Wenigstens eine der Scheiben (8, 16) aus einem Wellenlängen im Bereich von 780 bis 1200 nm absorbierenden Glas besteht, so daß die beschußhemmende Panzerglasscheibe eine Gesamtlichtdurchlässigkeit von Weniger als 15%, vorzugsweise von weniger als 10 % in dem Lichtspektralbereich zwischen 780 und 1200 nm aufweist.

3. Beschußhemmende Panzerglasscheibe aus mehreren Glasscheiben (16, 17, 18, 19) entsprechend der Norm DIN 52 290, insbesondere für Kraftfahrzeuge, **dadurch gekennzeichnet**, daß Wenigstens eine Scheibe (16) mit einer Wellenlängen im Bereich von 780 bis 1200 nm reflektierenden Schicht versehen ist un daß wenigstens eine der Scheiben (16) aus einem Wellenlängen im Bereich von 780 bis 1200 nm absorbierenden Glas besteht, so daß die beschußhemmende Panzerglasscheibe eine Gesamtlichtdurchlässigkeit von Weniger als 15%, vorzugsweise von weniger als 10 % in dem Lichtspektralbereich zwischen 780 und 1200 nm aufweist.

4. Beschußhemmende Panzerglasscheibe nach Anspruch 1 oder 3, deren die Wellenlängen im Bereich von 780 bis 1200 nm reflektierende Oberflächenschicht (6, 23) aus einer nach einem Vakuumverfahren aufgebrachte Mehrfachschicht mit wenigstens einer Funktionsschicht auf Silberbasis ist.

5. Beschußhemmende Panzerglasscheibe nach Anspruch 1, 3 oder 4, **dadurch gekennzeichnet**, daß die Funktionsschicht auf Silberbasis in einer Mehrfachschicht enthalten ist, welche unter den nachstehenden Schichtfolgen ausgewählt ist: ZnO-Ag-ZnO,
ZnO-Ag-ZnO-Ag-ZnO,
ZnO-Ag-Zn-ZnO-Ag-Zn-ZnOₓ,
SnO₂-ZnO-Zn-Ag-ZnO-Zn-Ag-ZnO,
Ti (oderTiO₂)-ZnS-Ag-ZnS-Ag-ZnS-Ti (oder TiOₓ).

6. Beschußhemmende Panzerglasscheibe nach einem der Ansprüche 1, 3, 4 oder 5, deren die Wellenlängen zwischen 780 und 1200 nm reflektierende Oberflächenschicht (6; 23) auf der nach innen gerichteten Oberfläche der äußersten Einzelglasscheibe (1; 16) angeordnet ist.

7. Beschußhemmende Panzerglasscheibe nach einem der Ansprüche 1 bis 6, deren dem Fahrgastraum zugewandte Seite mit einer oder mehreren im Beschußfall den Splitterabgang verhindernden Polymerschicht versehen ist.

8. Beschußhemmende Panzerglasscheibe nach einem der Ansprüche 1 bis 7, welche außerdem auf der nach außen gerichteten Seite der Panzerglasscheibe eine vor der Verbundglasscheibe angeordnete, eine Luftzwischenschicht definierende weitere Glasscheibe umfaßt.
